# EUROPEAN PATENT APPLICATION

(11) **EP 4 455 232 A1**
(43) Date of publication of application: **30.10.2024**
(21) Application number: 22910983.0
(22) Date of filing: 12.12.2022
(51) Int. Cl.: C09D 11/38, C09D 11/40, B41M 5/00, B41J 2/01

(54) **ELECTRON BEAM-CURING INKJET INK, INK SET, AND IMAGE RECORDING METHOD**

(30) Priority: 20.12.2021 JP 2021206144
(71) Applicant: FUJIFILM Corporation, Tokyo 106-8620 (JP)
(72) Inventor: MAKUTA, Toshiyuki, Ashigarakami-gun, Kanagawa 258-8577 (JP)
(74) Representative: HGF
(86) International application number: PCT/JP2022/045669
(87) International publication number: WO 2023/120275

(57) **Abstract**

Provided is an ink jet ink for electron beam curing including a polymerizable monomer, a hydrogen abstraction-type polymerization initiator including a polymerizable group, and a surfactant including a polymerizable group. Also provided are an ink set and an image recording method.

## Description

### BACKGROUND OF THE INVENTION

### 1. Field of the Invention

The present disclosure relates to an inkjet ink for electron beam curing, an ink set, and an image recording method.

### 2. Description of the Related Art

In one known image recording method, an ink is applied to a substrate, and the applied ink is cured by irradiation with active energy rays such as ultraviolet rays to thereby obtain an image.

In recent years, it has been contemplated to replace the ultraviolet rays used as the active energy rays for irradiation with electron beams.

For example, JP2018-86726A discloses a cured film forming method by which a cured film having high adhesiveness to a substrate and containing only small amounts of residual monomers can be formed. The method includes a composition application step of applying a curable composition including a polymerizable monomer to a recording medium and an irradiation step of irradiating the curable composition with at least two types of active energy rays. The active energy rays used in the irradiation step include at least an electron beam with an acceleration voltage of 130 kV or less. In the irradiation step, the curable composition is irradiated with the electron beam such that the absorbed dose is 20 to 75 kGy.

### SUMMARY OF THE INVENTION

In some cases, the image recording method including applying an ink to a substrate and curing the applied ink by irradiation with an electron beam to obtain an image is required to record an image with high line quality (i.e., low raggedness in a line image) and good image density.

In other cases, the image recording method is required to record an image with reduced migration (i.e., a phenomenon in which a component included in the ink leaches out of the recorded image).

An object of aspects of the disclosure is to provide an ink jet ink for electron beam curing, an ink set, and an image recording method that are capable of recording an image with high line quality, good image density, and reduced migration.

The present disclosure includes the following aspects.
<1> An inkjet ink for electron beam curing including:
   a polymerizable monomer;
   a hydrogen abstraction-type polymerization initiator including a polymerizable group; and
   a surfactant including a polymerizable group.
<2> The inkjet ink for electron beam curing according to <1>, wherein the hydrogen abstraction-type polymerization initiator including a polymerizable group includes at least one selected from the group consisting of a thioxanthone compound including a polymerizable group and a benzophenone compound including a polymerizable group.
<3> The inkjet ink for electron beam curing according to <1> or <2>, further including an amine compound including a polymerizable group.
<4> The inkjet ink for electron beam curing according to any one of <1> to <3>, wherein the surfactant including a polymerizable group includes a silicone-based surfactant including a (meth)acryloyl group.
<5> The inkjet ink for electron beam curing according to any one of <1> to <4>, wherein a total content of compounds each including a polymerizable group with respect to a total amount of the ink jet ink for electron beam curing is 80% by mass or more.
<6> The inkjet ink for electron beam curing according to any one of <1> to <5>, wherein the polymerizable monomer includes a polyfunctional polymerizable monomer at a ratio of 60% by mass or more to the total amount of the polymerizable monomer.
<7> An ink set including two or more ink jet inks for electron beam curing, each of the ink jet inks being the ink jet ink for electron beam curing according to any one of <1> to <6>.
<8> An image recording method including:
   an application step of applying the ink jet ink for electron beam curing according to any one of <1> to <6> to an impermeable substrate; and
   an electron beam irradiation step of irradiating the ink jet ink for electron beam curing applied to the impermeable substrate with an electron beam.
<9> The image recording method according to <8>,wherein the application step further includes irradiating the ink jet ink for electron beam curing applied to the impermeable substrate with ultraviolet rays including a radiation with a wavelength of 300 nm to 395 nm.
<10> An image recording method including:
   a first ink application step of applying a first ink to an impermeable substrate and irradiating the applied first ink with ultraviolet rays including a radiation with a wavelength of 300 nm to 395 nm, the first ink being the ink jet ink for electron beam curing according to any one of <1> to <6>;
   a second ink application step of applying a second ink to the first ink irradiated with the ultraviolet rays, the second ink being the ink jet ink for electron beam curing according to any one of <1> to <6>; and
   an electron beam irradiation step of, after the second ink application step, irradiating the first ink and the second ink on the impermeable substrate with an electron beam.

The ink jet ink for electron beam curing, the ink set, and the image recording method according to the aspects of the present disclosure are capable of recording an image with high line quality, good image density, and reduced migration.

### DESCRIPTION OF THE PREFERRED EMBODIMENTS

In the present disclosure, a numerical range represented using "to" means a range including the numerical values before and after the "to" as the minimum value and the maximum value, respectively.

In the present disclosure, when a composition includes a plurality of materials corresponding to the same component, the amount of the component in the composition means the total amount of the plurality of materials present in the composition, unless otherwise specified.

In a set of numerical ranges expressed in a stepwise manner in the present disclosure, the upper or lower limit in one numerical range may be replaced with the upper or lower limit in another numerical range in the set or may be replaced with a value indicated in an Example.

In the present disclosure, the term "step" is meant to include not only an independent step but also a step that is not clearly distinguished from other steps, so long as the prescribed purpose of the step can be achieved.

In the present disclosure, a combination of preferred modes is a more preferred mode.

In the present disclosure, the term "(meth)acrylate" is a concept that encompasses both acrylate and methacrylate. The term "(meth)acryloyl group" is a concept that encompasses both an acryloyl group and a methacryloyl group, and the term "(meth)acrylic acid" is a concept that encompasses both acrylic acid and methacrylic acid.

In the present disclosure, the term "image" is a general term for films formed using ink, and the term "image recording" means the formation of an image (i.e., a film).

In the present disclosure, the concept of "image" also encompasses solid images.

### [Ink jet ink for electron beam curing]

The inkjet ink for electron beam curing (hereinafter referred to simply as the "ink") of the present disclosure includes:
a polymerizable monomer;
a hydrogen abstraction-type polymerization initiator including a polymerizable group; and
a surfactant including a polymerizable group.

In the present disclosure, the ink jet ink for electron beam curing means an ink jet ink that is to be cured by irradiation with an electron beam to thereby form an image.

In the present disclosure, final curing for obtaining an image (i.e., curing by the above-described irradiation with an electron beam) may be referred to as "final curing."

In the present disclosure, curing an ink by pinning exposure to ultraviolet rays (e.g., LED light) before the final curing may be referred to as "pre-curing."

The ink for electron beam curing of the present disclosure is an ink that is used for the purpose of being final-cured by irradiation with an electron beam but may be capable of being pre-cured by pinning exposure.

With the ink of the present disclosure, an image having high line quality, good image density, and reduced migration can be recorded.

In the present disclosure, the term "migration" means a phenomenon in which a component of the ink used to record an image leaches out of the image, and the term "migration amount" means the amount of the component leached out by migration.

The reason that the above effects are obtained may be as follows.

The effects that the line quality is high and the image density is good may be effects achieved by a combination of the polymerization initiator and the surfactant.

The reason that the migration from the image is reduced may be as follows. The polymerization initiator and the surfactant in the ink include the respective polymerizable groups. Therefore, the polymerization initiator and the surfactant are incorporated into a polymer network formed in the image by polymerization. The reason that the effect of reducing migration is obtained may be that, since the polymerization initiator is the hydrogen abstraction-type polymerization initiator, the polymerization initiator is not decomposed even when irradiated with an electron beam.

The above effects are particularly effective when an image is recorded on an impermeable substrate (e.g., a resin substrate).

In the present disclosure, the impermeable substrate is a substrate having a water absorption (unit: % by mass, measurement time: 24 hours) of less than 0.2 as measured by an ASTM test method according to ASTM D570.

Specific examples of the impermeable substrate will be described later.

Since the ink of the present disclosure has the above-described effects (in particular, a reduction in migration), the ink is particularly suitable, for example, for image recording on food packaging materials, which are impermeable substrates. The fact that the migration can be effectively reduced is advantageous in reducing a bad smell from the image.

Examples of the impermeable substrates used as food packaging materials include resin-made beverage containers and resin-made food packaging materials.

However, the application of the ink of the present disclosure is not limited to the image recording on the impermeable substrates used as food packaging materials.

The components that may be included in the ink of the present disclosure will be described.

### <Polymerizable monomer>

The ink of the present disclosure includes at least one polymerizable monomer.

The polymerizable monomer is a basic component of the inkjet ink for electron beam curing.

When the ink of the present disclosure is irradiated with an electron beam, the polymerizable monomer in the ink is polymerized, and the ink is cured, so that an image is formed.

Therefore, the polymerizable monomer is a prerequisite component that provides the effects of the ink of the present disclosure.

The polymerizable monomer further contributes to an improvement in the adhesiveness between the impermeable substrate and the image.

In the present disclosure, the polymerizable monomer means a compound including a polymerizable group and having a molecular weight of 1000 or less.

The polymerizable group included in the polymerizable monomer may be a cationically polymerizable group or may be a radically polymerizable group. From the viewpoint of curability, the polymerizable group is preferably a radically polymerizable group. From the viewpoint of curability, the radically polymerizable group is preferably an ethylenically unsaturated group.

The ethylenically unsaturated group is preferably a (meth)acryloyl group, a vinyl group, an allyl group, or a styryl group and more preferably a (meth)acryloyl group or a vinyl group.

The molecular weight of the polymerizable monomer is 1000 or less and more preferably 800 or less.

The lower limit of the molecular weight of the polymerizable monomer is, for example, 58 (the molecular weight of methyl vinyl ether).

The polymerizable monomer may be a monofunctional polymerizable monomer having one polymerizable group or a polyfunctional polymerizable monomer having two or more polymerizable groups.

### (Monofunctional polymerizable monomer)

No particular limitation is imposed on the monofunctional polymerizable monomer, so long as it is a compound having one polymerizable group. From the viewpoint of curability, the monofunctional polymerizable monomer is preferably a monofunctional radically polymerizable monomer and more preferably a monofunctional ethylenically unsaturated monomer.

Examples of the monofunctional ethylenically unsaturated monomer include monofunctional (meth)acrylates, monofunctional (meth)acrylamides, monofunctional aromatic vinyl compounds, monofunctional vinyl ethers, and monofunctional N-vinyl compounds.

For specific examples of the monofunctional polymerizable monomer, see, for example, paragraphs 0023 to 0028 of WO2021/193230A.

### (Polyfunctional polymerizable monomer)

No particular limitation is imposed on the polyfunctional polymerizable monomer, so long as it is a monomer including two or more polymerizable groups. From the viewpoint of curability, the polyfunctional polymerizable monomer is preferably a polyfunctional radically polymerizable monomer and more preferably a polyfunctional ethylenically unsaturated monomer.

Examples of the polyfunctional ethylenically unsaturated monomer include polyfunctional (meth)acrylate compounds and polyfunctional vinyl ethers.

Examples of the polyfunctional (meth)acrylate include ethylene glycol di(meth)acrylate, diethylene glycol di(meth)acrylate, triethylene glycol di(meth)acrylate, polyethylene glycol di(meth)acrylate, propylene glycol di(meth)acrylate, dipropylene glycol di(meth)acrylate, tripropylene glycol di(meth)acrylate, polypropylene glycol di(meth)acrylate, butylene glycol di(meth)acrylate, tetraethylene glycol di(meth)acrylate, neopentyl glycol di(meth)acrylate, 3-methyl-1,5-pentanediol di(meth)acrylate, hexanediol di(meth)acrylate, heptanediol di(meth)acrylate, EO-modified neopentyl glycol di(meth)acrylate, PO-modified neopentyl glycol di(meth)acrylate, EO-modified hexanediol di(meth)acrylate, PO-modified hexanediol di(meth)acrylate, octanediol di(meth)acrylate, nonanediol di(meth)acrylate, decanediol di(meth)acrylate, dodecanediol di(meth)acrylate, 1,6-hexanediol di(meth)acrylate, glycerin di(meth)acrylate, pentaerythritol di(meth)acrylate, ethylene glycol diglycidyl ether di(meth)acrylate, diethylene glycol diglycidyl ether di(meth)acrylate, tricyclodecane dimethanol di(meth)acrylate, trimethylolethane tri(meth)acrylate, trimethylolpropane tri(meth)acrylate, trimethylolpropane EO-added tri(meth)acrylate, pentaerythritol tri(meth)acrylate, pentaerythritol tetra(meth)acrylate, dipentaerythritol tetra(meth)acrylate, dipentaerythritol penta(meth)acrylate, dipentaerythritol hexa(meth)acrylate, tri(meth)acryloyloxy ethoxytrimethylolpropane, glycerin polyglycidyl ether poly(meth)acrylate, and tris(2-acryloyloxyethyl)isocyanurate.

Examples of the polyfunctional vinyl ether include 1,4-butanediol divinyl ether, ethylene glycol divinyl ether, diethylene glycol divinyl ether, triethylene glycol divinyl ether, polyethylene glycol divinyl ether, propylene glycol divinyl ether, butylene glycol divinyl ether, hexanediol divinyl ether, 1,4-cyclohexanedimethanol divinyl ether, bisphenol A alkylene oxide divinyl ethers, bisphenol F alkylene oxide divinyl ethers, trimethylolethane trivinyl ether, trimethylolpropane trivinyl ether, ditrimethylolpropane tetravinyl ether, glycerin trivinyl ether, pentaerythritol tetravinyl ether, dipentaerythritol pentavinyl ether, dipentaerythritol hexavinyl ether, EO-added trimethylolpropane trivinyl ether, PO-added trimethylolpropane trivinyl ether, EO-added ditrimethylolpropane tetravinyl ether, PO-added ditrimethylolpropane tetravinyl ether, EO-added pentaerythritol tetravinyl ether, PO-added pentaerythritol tetravinyl ether, EO-added dipentaerythritol hexavinyl ether, and PO-added dipentaerythritol hexavinyl ether.

From the viewpoint of further improving the adhesiveness of the image and further reducing migration described later, it is preferable that the polymerizable monomer in the ink of the present disclosure includes a polyfunctional polymerizable monomer.

In this case, from the viewpoint of further improving the alkali-peelability of the image, the ratio of the polyfunctional polymerizable monomer to the total amount of the polymerizable monomers included in the ink is preferably 30% by mass or more, more preferably 50% by mass or more, and still more preferably 60% by mass or more.

The ratio of the polyfunctional polymerizable monomer may be 100% by mass.

From the viewpoint of reducing the viscosity of the ink and improving the ejectability of the ink, it is preferable that the polyfunctional polymerizable monomer includes at least one of a bifunctional polymerizable monomer (i.e., a compound including two polymerizable groups) or a trifunctional polymerizable monomer (i.e., a compound including three polymerizable groups).

In this case, the total ratio of the bifunctional polymerizable monomer and the trifunctional polymerizable monomer to the total amount of the polymerizable monomers included in the ink is preferably 30% by mass or more, more preferably 50% by mass or more, and still more preferably 60% by mass or more.

The total ratio of the bifunctional polymerizable monomer and the trifunctional polymerizable monomer may be 100% by mass.

From the viewpoint of reducing the viscosity of the ink and improving the ejectability of the ink, it is more preferable that the polyfunctional polymerizable monomer includes a bifunctional polymerizable monomer.

In this case, the ratio of the bifunctional polymerizable monomer to the total amount of the polymerizable monomers included in the ink is preferably 30% by mass or more, more preferably 50% by mass or more, and still more preferably 60% by mass or more.

From the viewpoint of further improving the adhesiveness of the image, the content of the polymerizable monomers to the total amount of the ink is preferably 50% by mass or more, more preferably 60% by mass or more, and still more preferably 80% by mass or more.

### <Hydrogen abstraction-type polymerization initiator including polymerizable group>

The ink of the present disclosure includes at least one hydrogen abstraction-type polymerization initiator including a polymerizable group (which may be hereinafter referred to also as a "polymerizable polymerization initiator").

The polymerizable group in the polymerizable polymerization initiator contributes a reduction in migration.

Preferred modes of the polymerizable group in the polymerizable polymerization initiator are the same as the preferred modes of the polymerizable group in the polymerizable monomer.

The hydrogen abstraction-type polymerization initiator used as the polymerizable polymerization initiator contributes to the curability during irradiation with an electron beam.

The hydrogen abstraction-type polymerization initiator used as the polymerizable polymerization initiator contributes also to a reduction in migration.

Preferably, the polymerizable polymerization initiator includes at least one selected from the group consisting of a thioxanthone compound including a polymerizable group (which may be hereinafter referred to also as a polymerizable thioxanthone compound) and a benzophenone compound including a polymerizable group (which may be hereinafter referred to also as a polymerizable benzophenone compound).

More preferably, the polymerizable polymerization initiator includes a compound represented by formula (I) below.

For the compound represented by the following formula (I), see JP5722777B.

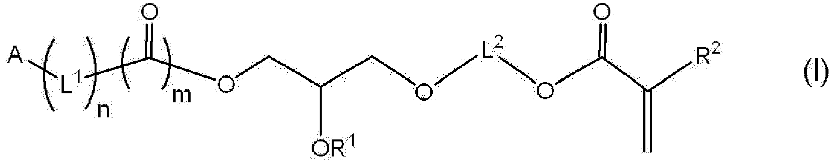

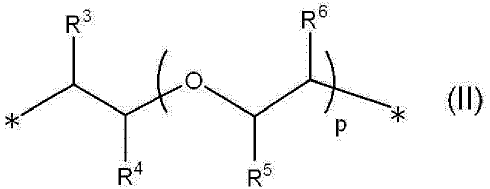

In formula (I),
A represents a monovalent group obtained by removing one hydrogen atom from a thioxanthone compound or a benzophenone compound;
L¹ represents a divalent linking group;
n represents 0 or 1;
m represents 0 or 1;
R¹ represents a hydrogen atom, an optionally substituted alkyl group, an optionally substituted alkenyl group, an optionally substituted alkynyl group, an optionally substituted alkylaryl group, an optionally substituted aralkyl group, an optionally substituted aryl group, an optionally substituted heteroaryl group, or an optionally substituted acyl group;
R² represents a hydrogen atom or a methyl group; and
L² represents an optionally substituted alkylene group, an optionally substituted alkenylene group, an optionally substituted alkynylene group, an optionally substituted arylene group, or a group represented by formula (II).

In formula (II),
R³ to R⁶ each independently represent a hydrogen atom or a methyl group;
p represents an integer of 1 to 10; and
* represents a bonding position.

In formula (I), the divalent linking group represented by L¹ is preferably an oxygen atom (-O-), an ethyleneoxy group, or a propyleneoxy group (-CH(CH₃)O- group).

In formula (I), R¹ is preferably a hydrogen atom, an unsubstituted alkyl group (more preferably an alkyl group having 1 to 6 carbon atoms and more preferably a methyl group, an ethyl group, or a propyl group), or an unsubstituted acyl group (more preferably a (meth)acryloyl group).

In formula (I), n is preferably 0.

In formula (I), L² is preferably an optionally substituted alkylene group.

In formula (I), R² is preferably a hydrogen atom.

In formula (I), it is preferable that n is 0 and L² is an optionally substituted alkylene group.

In formula (I), it is preferable that n is 0 and R² is a hydrogen atom.

In formula (I), it is preferable that L² is an optionally substituted alkylene group and R² is a hydrogen atom.

In a particularly preferred mode of formula (I), n is 0; L² is an unsubstituted alkylene group; and R² is a hydrogen atom.

Specific examples of the compound represented by formula (I) when A in formula (I) is a monovalent group obtained by removing one hydrogen atom from a thioxanthone compound are shown below. However, the compound represented by formula (I) in this case is not limited to the following specific examples.

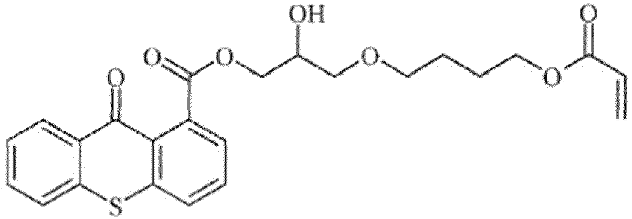

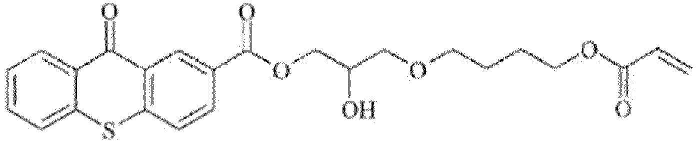

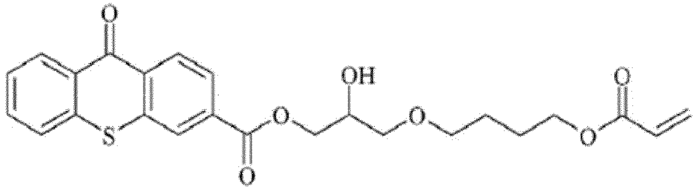

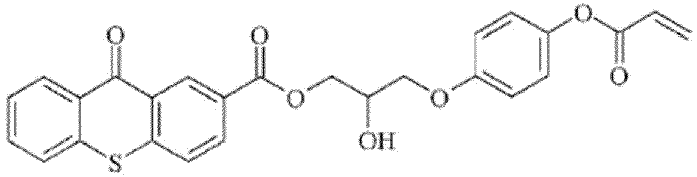

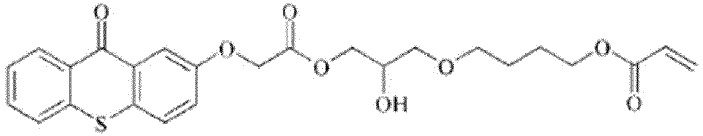

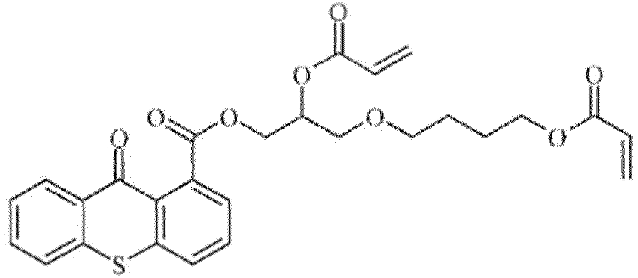

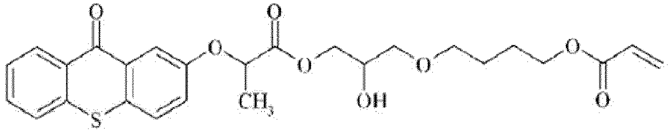

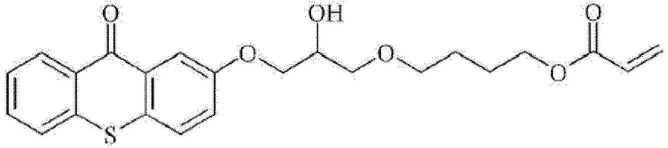

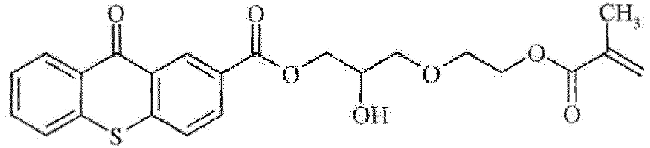

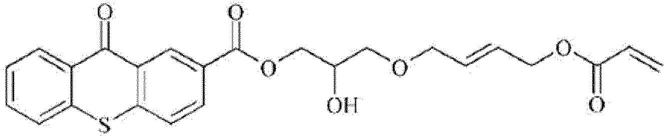

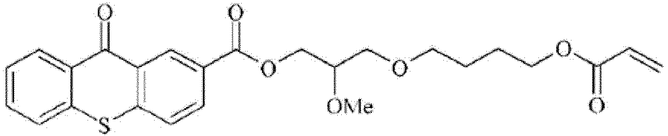

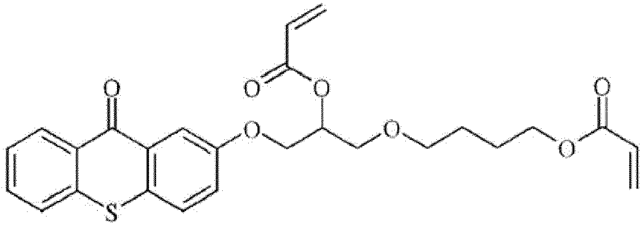

Specific examples of the compound represented by formula (I) when A in formula (I) is a monovalent group obtained by removing one hydrogen atom from a benzophenone compound are shown below. However, the compound represented by formula (I) in this case is not limited to the following specific examples.

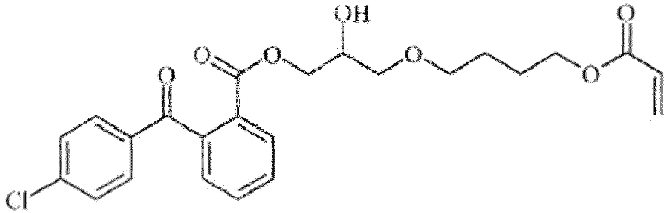

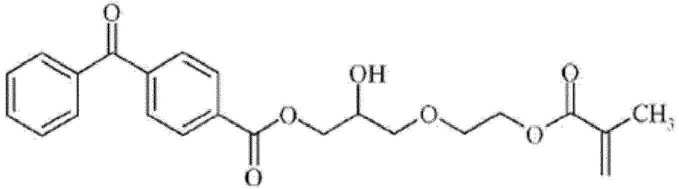

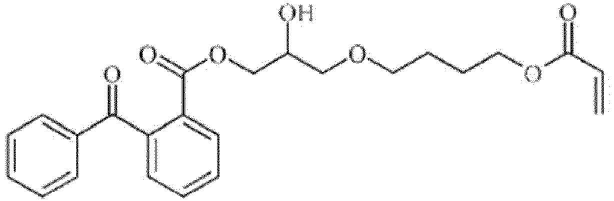

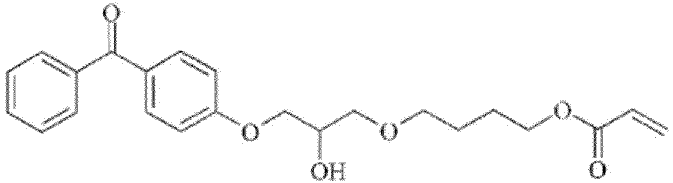

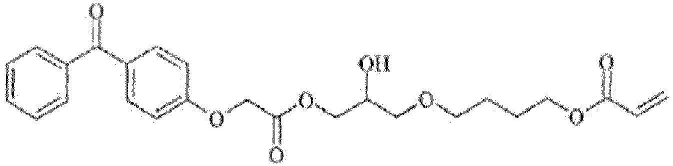

From the viewpoint of further improving the line quality and image density of the image, the content of the polymerizable polymerization initiator with respect to the total amount of the ink is preferably 0.1% by mass to 10% by mass, more preferably 1% by mass to 8% by mass, and still more preferably 1% by mass to 5% by mass.

### <Surfactant including polymerizable group>

The ink of the present disclosure includes at least one surfactant including a polymerizable group (which may be hereinafter referred to also as a "polymerizable surfactant").

The surfactant included in the ink of the present disclosure contributes to the effects on the line quality and the image density.

The polymerizable surfactant used as the surfactant included in the ink of the present disclosure contributes to the effect of reducing migration.

Preferred modes of the polymerizable group in the polymerizable surfactant are the same as the preferred modes of the polymerizable group in the polymerizable monomer.

The number of polymerizable groups in the polymerizable surfactant is preferably 2 or more and more preferably 3 or more. No particular limitation is imposed on the upper limit of the number of polymerizable groups in the polymerizable surfactant. From the viewpoint of ejectability of the ink when the ink is ejected using an ink jet recoding method, the upper limit of the number of polymerizable groups is, for example, 5.

The polymerizable surfactant includes
preferably at least one selected from the group consisting of a polymerizable silicone-based surfactant (i.e., a silicone-based surfactant including a polymerizable group), a polymerizable fluorine-based surfactant (i.e., a fluorine-based surfactant including a polymerizable group), and a polymerizable acrylic-based surfactant (i.e., an acrylic-based surfactant including a polymerizable group),
includes more preferably a polymerizable silicone-based surfactant, and
includes still more preferably a silicone-based surfactant including a (meth)acryloyl group.

Examples of the polymerizable silicone-based surfactant include a compound in which a polymerizable group is bonded to a main or side chain of polyether-modified dimethylsiloxane.

Examples of the commercial product of the polymerizable silicone-based surfactant include silicone-based surfactants having (meth)acryloyl groups such as: BYK-UV3500, 3505, 3530, 3570, 3575, and 3576 (manufactured by BYK); Tegorad 2100, 2200, 2250, 2300, 2500, 2600, 2700, 2800, 2010, and 2011 (manufactured by EVONIK); EBECRYL 350 and 1360 (manufactured by DAICEL-ALLNEX LTD.); and KP-410, 411, 412, 413, 414, 415, 416, 418, 420, 422, and 423 (manufactured by Shin-Etsu Silicone).

Examples of the polymerizable fluorine-based surfactant include a compound having a perfluoroalkyl group and a polymerizable group.

Examples of the commercial product of the polymerizable fluorine-based surfactant include fluorine-based surfactants having (meth)acryloyl groups such as MEGAFACE RS-56, RS-72-K, RS-75, RS-76-E, RS-65-NS, RS-78, and RS-90 (manufactured by DIC Corporation).

Examples of the polymerizable acrylic-based surfactant include a compound in which a polymerizable group is bonded to a side chain of a poly(meth)acrylic structure.

Examples of the commercial product of the polymerizable acrylic-based surfactant include CN821 (manufactured by Sartomer).

Preferably, the polymerizable surfactant is a compound that can highly effectively reduce surface tension.

Specifically, the degree of reduction in surface tension is defined as described below. Then the polymerizable surfactant is preferably a compound that allows the degree of reduction in surface tension with respect to the surface tension of cyclic trimethylolpropane formal acrylate (hereinafter referred to as "CTFA") to be 5 mN/m or more and more preferably a compound that allows the degree of reduction in surface tension with respect to the surface tension of CTFA to be 10 mN/m or more. No particular limitation is imposed on the upper limit of the degree of reduction in surface tension with respect to the surface tension of CTFA, but the upper limit is preferably 17 mN/m from the viewpoint of ejectability of the ink.

Degree of reduction in surface tension with respect to the surface tension of CTFA = (the surface tension of CTFA) - (the surface tension when the polymerizable surfactant is added in an amount of 0.5% by mass to CTFA)

The surface tension of CTFA is 36.5 mN/m.

The surface tension is measured using a surface tensiometer at 25°C by a plate method and can be measured, for example, using an automatic surface tensiometer (product name "DY-300") manufactured by Kyowa Interface Science Co., Ltd.

In other words, the polymerizable surfactant is preferably a compound that, when added in an amount of 0.5% by mass to CTFA, can reduce the surface tension to 31.5 mN/m or less and more preferably a compound that can reduce the surface tension to 26.5 mN/m or less.

The results of the measurement of the surface tension of various commercial surfactants when they were added in an amount of 0.5% by mass to CTFA are shown below. For a product in which the content of the surfactant is not 100% by mass (such as a product including a solvent in addition to the surfactant), the content of the surfactant was adjusted to 100% by mass, and the surface tension was measured using the surfactant alone. For reference purposes, the results of the measurement using non-polymerizable surfactants are also shown along with the results for the polymerizable surfactants. The term "non-polymerizable" means that the surfactant does not include a polymerizable group.

### - Polymerizable silicone-based surfactants -

BYK-UV3500: 23.9 mN/m
BYK-UV3505: 23.6 mN/m
BYK-UV3530: 33.3 mN/m
BYK-UV3570: 24.9 mN/m
BYK-UV3575: 24.3 mN/m
BYK-UV3576: 32.7 mN/m
Tegorad 2100: 27.5 mN/m
Tegorad 2200: 24.5 mN/m
Tegorad 2250: 23.3 mN/m
Tegorad 2300: 22.9 mN/m
Tegorad 2500: 21.9 mN/m
Tegorad 2650: 21.4 mN/m
Tegorad 2700: 21.3 mN/m
Tegorad 2800: 21.2 mN/m
Tegorad 2010: 21.9 mN/m
Tegorad 2011: 29.8 mN/m
KP-423: 21.6 mN/m

### - Polymerizable fluorine-based surfactants -

MEGAFACE RS-56: 22.1 mN/m
MEGAFACE RS-72-K: 22.5 mN/m
MEGAFACE RS-75: 22.3 mN/m
MEGAFACE RS-76-E: 22.7 mN/m
MEGAFACE RS-76-NS: 22.1 mN/m
MEGAFACE RS-78: 22.3 mN/m
MEGAFACE RS-90: 22.7 mN/m

### - Polymerizable acrylic-based surfactant -

CN821: 34.1 mN/m

### - Non-polymerizable silicone-based surfactants -

BYK 306: 22.2 mN/m
BYK-UV3510: 23.8 mN/m

### - Non-polymerizable fluorine-based surfactant -

MEGAFACE F554: 25.4 mN/m

### - Non-polymerizable acrylic-based surfactant -

BYK 361N: 34.6 mN/m

From the viewpoint of the line quality and image density, the polymerizable surfactant is preferably a polymerizable fluorine-based surfactant or a polymerizable silicone-based surfactant and more preferably a polymerizable silicone-based surfactant. From the viewpoint of improving ethanol resistance, the polymerizable surfactant is more preferably a silicone-based surfactant having a (meth)acryloyl group.

The molecular weight of the polymerizable surfactant is preferably 1000 to 20000.

The content of the polymerizable surfactant with respect to the total amount of the ink is preferably 0.1% by mass to 10% by mass, more preferably 0.5% by mass to 5% by mass, and still more preferably 0.5% by mass to 3% by mass.

### <Amine compound including polymerizable group>

From the viewpoint of curability during electron beam irradiation, it is preferable that the ink of the present disclosure includes at least one amine compound including a polymerizable group (which may be hereinafter referred to also as a "polymerizable amine compound").

The polymerizable amine compound used as the amine compound included in the ink of the present disclosure contributes to the effect of reducing migration.

The polymerizable amine compound includes preferably a (meth)acryloyl group as the polymerizable group and includes more preferably a (meth)acryloyloxy group.

From the viewpoint of reactivity and viscosity, when the polymerizable amine compound includes a (meth)acryloyloxy group, the number of (meth)acryloyloxy groups included is preferably 1 to 6, more preferably 1 to 4, and still more preferably 1 or 2.

Examples of the polymerizable amine compound include a compound represented by the following formula (X).

NR¹R²R³ formula (X)

[In formula (X), R¹ represents a substituent including a polymerizable group, and R² and R³ each independently represent a hydrogen atom or a substituent.]

Preferably, R² and R³ are each independently a substituent.

The molecular weight of the polymerizable amine compound is preferably 500 or more, more preferably 700 or more, still more preferably 800 or more, and yet more preferably 1000 or more.

The upper limit of the polymerizable amine compound is preferably 10000, more preferably 7000, and still more preferably 5000.

Preferably, the polymerizable amine compound includes an amine compound having a molecular weight of 1000 or more.

The ratio of the polymerizable amine compound having a molecular weight of 1000 or more in the polymerizable amine compound is preferably 50% by mass to 100% by mass, more preferably 60% by mass to 100% by mass, and still more preferably 80% by mass to 100% by mass.

The polymerizable amine compound used may be a commercial product.

Examples of the commercial product of the polymerizable amine compound include:
GENOMER 5161, GENOMER 5271, GENOMER 5275, and GENOMER 5795 (manufactured by RAHN AG);
CN371, CN373, CN383, CN384, CN386, CN501, CN550, and CN551 (manufactured by Sartomer);
EBECRYL 7100, EBECRYL 80, EBECRYL 81, EBECRYL 83, EBECRYL 84, and EBECRYLP 115 (manufactured by DAICEL-ALLNEX LTD.);
Laromer PO77F (LR8946), Laromer LR8956, Laromer LR8996, and Laromer PO94F (LR8894) (manufactured by BASF);
Photomer 4771, Photomer 4775, Photomer 4967, Photomer 5006, Photomer 5096, Photomer 5662, and Photomer 5930 (manufactured by Cognis);
Doublecure EPD, Doublecure OPD, Doublecure 115, Doublecure 225, Doublecure 645, PolyQ 222, PolyQ 226, PolyQ 224, and PolyQ 101 (manufactured by Double Bond Chemicals); and
Omnipol ASA (manufactured by IGM).

For the polymerizable amine compound, see, for example, paragraphs 0072 to 0074 of JP2011-68783A and paragraphs 0069 to 0070 of JP2015-160890A.

The content of the polymerizable amine compound with respect to the total amount of the ink is preferably 0.1% by mass to 20% by mass, more preferably 1% by mass to 10% by mass, and still more preferably 1% by mass to 5% by mass.

### <Pigment>

The ink of the present disclosure may include at least one pigment.

The pigment may be a commercially available organic pigment or may be a commercially available inorganic pigment.

Examples of the pigment include pigments described in "Ganryo no Jiten (Dictionary of Pigments)" ed. by Seishiro Ito (2000), W. Herbst and K. Hunger "Industrial Organic Pigments," JP2002-12607A, JP2002-188025A, JP2003-26978A, and JP2003-342503A.

The pigment may be a white pigment or may be a color pigment.

Examples of the color pigment include cyan pigments, magenta pigments, yellow pigments, and black pigments. The color pigment may be any other color pigment.

When, for example, at least two image inks are used in the step of applying the image inks, the at least two image inks may include a white ink including a white pigment and a color ink including a color pigment. In this case, only one color ink may be used, or two or more color inks may be used. The two or more color inks are, for example, two or more selected from a cyan ink including a cyan pigment, a magenta ink including a magenta pigment, a yellow ink including a yellow pigment, and a black ink including a black pigment.

The pigment content (i.e., the total content of the pigments included in the ink) with respect to the total amount of the ink is preferably 1% by mass to 30% by mass, more preferably 1% by mass to 20% by mass, and still more preferably 2% by mass to 10% by mass.

The ink including a pigment can be prepared using a pigment dispersion.

The pigment dispersion is a liquid obtained by dispersing the pigment in a liquid medium using a pigment dispersant and includes at least the pigment dispersant and the liquid medium.

Examples of the liquid medium include organic solvents.

The liquid medium may be a polymerizable monomer to be included in the ink.

When the pigment used is a self-dispersible pigment, the ink may include no pigment dispersant.

### <Pigment dispersant>

As described above, the pigment dispersion for the ink of the present disclosure may include the pigment and the pigment dispersant.

Examples of the pigment dispersant include low-molecular weight pigment dispersants having a molecular weight of less than 1000 such as higher fatty acid salts, alkyl sulfates, alkyl ester sulfates, alkyl sulfonates, sulfosuccinate, naphthalenesulfonate, alkyl phosphates, polyoxyalkylene alkyl ether phosphates, polyoxyalkylene alkyl phenyl ethers, polyoxyethylene polyoxypropylene glycol, glycerin fatty acid esters, sorbitan fatty acid esters, polyoxyethylene fatty acid amides, and amine oxides.

Other examples of the pigment dispersant include a high-molecular weight pigment dispersant having a molecular weight of 1000 or more and obtained by copolymerizing a hydrophilic monomer and a hydrophobic monomer. From the viewpoint of dispersion stability, the hydrophilic monomer is preferably a dissociable group-containing monomer and preferably a dissociable group-containing monomer having a dissociable group and an ethylenically unsaturated bond. Examples of the dissociable group-containing monomer include carboxy group-containing monomers, sulfonic acid group-containing monomers, and phosphate group-containing monomers. From the viewpoint of dispersion stability, the hydrophobic monomer is preferably an aromatic group-containing monomer having an aromatic group and an ethylenically unsaturated bond or an aliphatic hydrocarbon group-containing monomer having an aliphatic hydrocarbon group and an ethylenically unsaturated bond. The polymer may be a random copolymer or may be a block copolymer.

The pigment dispersant may be a commercial product. Examples of the commercial product include:
DISPERBYK-101, DISPERBYK-102, DISPERBYK-103, DISPERBYK-106, DISPERBYK-110, DISPERBYK-111, DISPERBYK-161, DISPERBYK-162, DISPERBYK-163, DISPERBYK-164, DISPERBYK-166, DISPERBYK-167, DISPERBYK-168, DISPERBYK-170, DISPERBYK-171, DISPERBYK-174, and DISPERBYK-182 (manufactured by BYK-Chemie); and
SOLSPERSE 3000, SOLSPERSE 5000, SOLSPERSE 9000, SOLSPERSE 12000, SOLSPERSE 13240, SOLSPERSE 13940, SOLSPERSE 17000, SOLSPERSE 22000, SOLSPERSE 24000, SOLSPERSE 26000, SOLSPERSE 28000, SOLSPERSE 32000, SOLSPERSE 36000, SOLSPERSE 39000, SOLSPERSE 41000, and SOLSPERSE 71000 (manufactured by Lubrizol).

The pigment dispersant may be a pigment dispersant including a polymerizable group.

In this case, migration is further reduced.

A dispersing device used to disperse the pigment may be a well-known dispersing device, and examples thereof include a ball mill, a sand mill, a bead mill, a roll mill, a jet mill, a paint shaker, an attritor, an ultrasonic disperser, and a disperser.

From the viewpoint of dispersion stability, the mass ratio of the pigment dispersant with respect to the mass of the pigment in the ink is preferably 0.05 to 1.0 and more preferably 0.1 to 0.5.

### <Additional components>

The ink of the present disclosure may optionally include additional components other than the above-described components. Examples of the additional components include a sensitizer, a co-sensitizer, a polymerization inhibitor, an ultraviolet absorber, an antioxidant, a fading inhibitor, an electrically conductive salt, an organic solvent, and a basic compound.

From the viewpoint of the effect of reducing migration, the total content of the compounds including polymerizable groups (i.e., at least the polymerizable monomer, the polymerizable polymerization initiator, and the polymerizable surfactant, the same applies to the following) in the ink of the present disclosure with respect to the total amount of the ink is preferably 80% by mass or more.

When the ink of the present disclosure includes the pigment, the total content of the compounds including polymerizable groups (i.e., at least the polymerizable monomer, the polymerizable polymerization initiator, and the polymerizable surfactant) in the ink of the present disclosure with respect to the total amount of the ink excluding the pigment is preferably 90% by mass or more and more preferably 95% by mass or more, from the viewpoint of the effect of reducing migration.

When the ink of the present disclosure includes no pigment, the total content of the compounds including polymerizable groups (i.e., at least the polymerizable monomer, the polymerizable polymerization initiator, and the polymerizable surfactant) in the ink of the present disclosure with respect to the total amount of the ink is preferably 90% by mass or more and more preferably 95% by mass or more, from the viewpoint of the effect of reducing migration.

### <Preferred physical properties>

The viscosity of the ink of the present disclosure is preferably 0.5 mPa·s to 30 mPa·s, more preferably 2 mPa·s to 20 mPa·s, still more preferably 2 mPa·s to 15 mPa·s, and yet more preferably 3 mPa·s to 10 mPa·s.

The viscosity is measured at 25°C using a viscometer and is measured, for example, using a TV-22 viscometer manufactured by Toki Sangyo Co., Ltd.

The surface tension of the ink of the present disclosure is preferably 60 mN/m or less, more preferably 20 mN/m to 50 mN/m, and still more preferably 25 mN/m to 45 mN/m.

The surface tension is measured at 25°C using a surface tensiometer and measured, for example, using an automatic surface tensiometer (product name "CBVP-Z") manufactured by Kyowa Interface Science Co., Ltd. by a plate method.

### [Ink set]

The ink set of the present disclosure includes two or more inks, each of the inks being the ink of the present disclosure described above.

The ink set of the disclosure includes the inks of the present disclosure described above and therefore has the same effects as those obtained by the inks of the present disclosure (i.e., an image having high line quality and good image density can be recorded and migration from the recorded image can be reduced).

The ink set of the disclosure is preferably an ink set including a white ink, which is the ink of the present disclosure, and a color ink, which is the ink of the present disclosure.

In the present disclosure, the concept of the color ink encompasses a black ink.

In one preferred mode of the ink set, the color ink is preferably at least one of a cyan ink, a magenta ink, a yellow ink, or a black ink.

The ink set in the preferred mode is particularly suitable for image recoding using a white ink as a first ink and a color ink as a second ink in a recording method A described later.

### [Image recording method]

The image recording method of the disclosure includes:
an application step of applying the ink of the present disclosure to an impermeable substrate; and
an electron beam irradiation step of irradiating the ink applied to the impermeable substrate with an electron beam.

In the image recording method of the disclosure, the ink of the present disclosure is used. Therefore, the same effects as those obtained by the ink of the present disclosure (i.e., an image having high line quality and good image density can be recorded and migration from the recorded image can be reduced) are obtained.

### <Impermeable substrate>

In the image recording method of the disclosure, an image is recorded on the impermeable substrate.

No particular limitation is imposed on the impermeable substrate, but a resin substrate is preferred.

No particular limitation is imposed on the resin substrate, and examples thereof include thermoplastic resin substrates.

The resin substrate is, for example, a substrate prepared by forming a thermoplastic resin into a 3D shape such as a bottle shape or another shape such as a sheet shape or a film shape.

Preferably, the resin in the resin substrate includes at least one selected from the group consisting of polyester (such as polyethylene terephthalate and polyethylene naphthalate), polypropylene, polyethylene, polyvinyl chloride, nylon, polyimide, polycarbonate, and polystyrene.

From the viewpoint of improving the surface energy of the resin substrate, the resin substrate may be subjected to surface treatment.

Examples of the surface treatment include, but not limited to, corona treatment, plasma treatment, flame treatment, heat treatment, attrition treatment, light irradiation treatment (UV treatment), and flame treatment.

The impermeable substrate is preferably a resin-made beverage container (such as a PET bottle) or a resin-made food packaging material.

In image recording using the above impermeable substrates, the image is often required to have high line quality, good image density, and high migration resistance (i.e., the ability to reduce migration), so that the application of the image recording method of the disclosure is highly significant.

### <Application step>

In the application step, the ink of the present disclosure is applied to the impermeable substrate.

No particular limitation is imposed on the method for applying the ink (which may be hereinafter referred to as an ink jet recording method) so long as it is a method capable of recording an image, and any known method can be used.

Examples of the ink jet recording method include: a charge control method in which an ink is ejected by utilizing electrostatic attraction force; a drop-on-demand method (pressure pulse method) that utilizes the vibration pressure of a piezoelectric element; an acoustic ink jet method including converting an electric signal to an acoustic beam, irradiating an ink with the acoustic beam, and ejecting the ink by utilizing the radiation pressure; and a thermal ink jet (BUBBLEJET (registered trademark)) method including heating an ink to form air bubbles and utilizing the pressure generated. In the present disclosure, the drop-on-demand method that utilizes the vibration pressure of a piezoelectric element is preferably used because of its ejectability.

Examples of the type of ink jet head used for the ink jet recording method include: a shuttle method in which a short serial head is used and the recording is performed while the head is moved in the width direction of the impermeable substrate; and a line method that uses a line head including recording elements arranged so as to cover the entire region of a side edge of the impermeable substrate.

In the line method, the impermeable substrate is moved in a direction intersecting the arrangement direction of the recording elements, so that a pattern can be formed over the entire impermeable substrate. Therefore, a transport system such as a carriage for moving a short head can be eliminated. In the line method, it is unnecessary to move the carriage and perform complicated scanning control of the impermeable substrate, and only the impermeable substrate is moved, so that the recording speed can be higher than that of the shuttle method.

The amount of ink droplets ejected from the ink jet head is preferably 1 pL (pico liter) to 100 pL, more preferably 3 pL to 80 pL, and still more preferably 3 pL to 50 pL.

### (Irradiation with ultraviolet rays)

The application step may further include irradiating the ink of the present disclosure applied to the impermeable substrate with ultraviolet (UV) rays including a radiation with a wavelength of 300 nm to 395 nm.

The irradiation with the ultraviolet rays is suitable for pinning exposure.

The irradiation with the ultraviolet rays allows the ink to be pre-cured. In this manner, the effects of the final curing by irradiation with the electron beam are obtained more effectively, so that the line quality and image density of the image obtained are further improved.

The ultraviolet rays include a radiation having a wavelength of 300 nm to 395 nm.

The UV light source used for the irradiation with ultraviolet rays may be a well-known UV light source in which at least one of illuminance or irradiation time can be changed.

The UV light source is preferably an LED (Light Emitting Diode) light source.

The irradiation illuminance of the ultraviolet rays is preferably 0.10 W/cm² to 0.50 W/cm², more preferably 0.20 W/cm² to 0.50 W/cm², and still more preferably 0.25 W/cm² to 0.45 W/cm².

The irradiation energy of the ultraviolet rays is preferably 2 mJ/cm² to 20 mJ/ cm² and more preferably 4 mJ/cm² to 15 mJ/cm².

### <Electron beam irradiation step>

The electron beam irradiation step is the step of irradiating the ink applied to the impermeable substrate with an electron beam (EB).

By irradiating the ink on the impermeable substrate with the electron beam, the compounds including polymerizable groups in the ink are polymerized, and the ink is thereby final-cured, so that an image is obtained.

The electron beam irradiation can be performed using an electron beam irradiation device.

No particular limitation is imposed on the electron beam irradiation conditions.

The acceleration voltage for the electron beam irradiation is, for example, 50 kV to 200 kV and preferably 50 kV to 110 kV.

The dose of the electron beam irradiation is, for example, 10 kGy to 100 kGy and preferably 30 kGy to 90 kGy.

The processing speed of the electron beam irradiation is, for example, 1 m/minute to 200 m/minute.

The electron beam irradiation may be performed in an environment with an oxygen concentration of 20% by volume or lower (more preferably lower than 20% by volume and still more preferably 5% by volume or lower). In this case, inhibition of polymerization by oxygen is prevented, and migration is further reduced.

The environment with an oxygen concentration of lower than 20% by volume is preferably an environment in the presence of an inert gas (such as nitrogen gas, argon gas, or helium gas).

The image recording method of the disclosure may optionally include an additional step other than the steps described above.

Next, a recording method A, which is a preferred mode of the image recording method of the disclosure, will be described.

### <Recording method A>

The recording method A includes:
a first ink application step of applying a first ink, which is the ink of the present disclosure, to an impermeable substrate and irradiating the applied first ink with ultraviolet rays including a radiation with a wavelength of 300 nm to 395 nm;
a second ink application step of applying a second ink, which is the ink of the present disclosure, to the first ink irradiated with the ultraviolet rays; and
an electron beam irradiation step of, after the second ink application step, irradiating the first and second inks on the impermeable substrate with an electron beam.

The recording method A may optionally include an additional step other than the steps described above.

With the recording method A, a multilayer image having a structure in which an image formed using the second ink is formed on a base image formed using the first ink can be recorded.

The obtained multilayer image has high line quality and good image density and has good migration resistance.

Preferably, the first ink is, for example, a white ink that is the ink of the present disclosure.

Preferably, the second ink is, for example, at least one of a cyan ink, a magenta ink, a yellow ink, or a black ink.

The second ink application step may be the step of applying two or more second inks.

With the combination of the first and second inks, a multilayer image including a white base image and a color image (such as a character image, a line image, or a pattern image) having high line quality and good image density and disposed on the base image can be recorded.

### <First ink application step>

The first ink application step is the step of applying the first ink, which is the ink of the present disclosure, to the impermeable substrate and irradiating the applied first ink with ultraviolet rays including a radiation with a wavelength of 300 nm to 395 nm.

The conditions for the application step in the image recording method of the disclosure are applicable to the first ink application step.

The ultraviolet ray irradiation in the first ink application step is suitable for pinning exposure for the first ink.

In this step, as a result of the irradiation of the first ink with the ultraviolet rays (e.g., pinning exposure), the first ink is pre-cured. Since the second ink described later is applied to the pre-cured first ink, the line quality and image density of the image formed using the second ink are further improved.

### <Second ink application step>

The second ink application step is the step of applying the second ink, which is the ink of the present disclosure, to the first ink irradiated with the ultraviolet rays (e.g., subjected to pinning exposure).

The conditions for the application step in the image recording method of the disclosure are also applicable to the second ink application step.

The second ink application step may include irradiating the applied second ink with ultraviolet rays including a radiation with a wavelength of 300 nm to 395 nm (e.g., pinning exposure), but the ultraviolet ray irradiation is not essential. The reason for this is that the second ink can be final-cured in the electron beam irradiation step described later irrespective of whether the ultraviolet ray irradiation has been performed in the second ink application step.

In the second ink application step, two or more second inks (for example, at least two selected from the group consisting of a cyan ink, a magenta ink, a yellow ink, and a black ink) may be applied to the first ink irradiated with the ultraviolet rays (e.g., subjected to pinning exposure).

### <Electron beam irradiation step>

The electron beam irradiation step is the step of, after the second ink application step, irradiating the first and second inks on the impermeable substrate with an electron beam.

The first ink irradiated with the electron beam in this step is the pre-cured first ink.

The first ink and the second ink are each the ink jet ink for electron beam curing of the disclosure. Therefore, as a result of the electron beam irradiation, the first ink and the second ink are final-cured. In this manner, a multilayer image including an image formed using the second ink and having high line quality, good image density, and reduced migration is obtained.

### [EXAMPLES]

Examples in the present disclosure will be shown below, but the present disclosure is not limited to the following Examples.

The term "parts" means parts by mass.

To prepare an ink including Speedcure 7010 and EOTMPTA, Speedcure 7010L (manufactured by Lambson) was used. The Speedcure 7010L is a mixture of Speedcure 7010 and EOTMPTA, and its mixing ratio is 1:1 based on mass.

### <Preparation of pigment dispersions>

Components shown in the chemical composition of a cyan dispersion D1C shown below were placed in a dispersing motor mill M50 (manufactured by Eiger) and dispersed using zirconia beads with a diameter of 0.65 mm at a peripheral speed of 9 m/s for 4 hours to thereby obtain the cyan pigment dispersion D1C.

A magenta dispersion D1M, a yellow dispersion D1Y, a black dispersion D1K, and a white dispersion D1W were also prepared in the same manner.

### (Chemical composition of cyan dispersion D1C)

- IRGALITE BLUE GLVO (cyan pigment manufactured by BASF Japan Ltd.) 30 parts
- SR9003 (polyfunctional polymerizable monomer, propoxylated (2) neopentyl glycol diacrylate manufactured by Sartomer)
   62 parts
- SOLSPERSE 32000 (pigment dispersant manufactured by Noveon)
   8 parts

### (Chemical composition of magenta dispersion D1M)

- CINQUASIA MAGENTA RT-355-D (magenta pigment manufactured by BASF Japan Ltd.)
   30 parts
- SR9003 (polyfunctional polymerizable monomer, propoxylated (2) neopentyl glycol diacrylate manufactured by Sartomer)
   60 parts
- SOLSPERSE 32000 (pigment dispersant manufactured by Noveon)
   10 parts

### (Chemical composition of yellow dispersion D1Y)

- NOVOPERM YELLOW H2G (yellow pigment manufactured by Clariant)
   30 parts
- SR9003 (polyfunctional polymerizable monomer, propoxylated (2) neopentyl glycol diacrylate manufactured by Sartomer)
   60 parts
- SOLSPERSE 32000 (pigment dispersant manufactured by Noveon)
   10 parts

### (Chemical composition of black dispersion D1K)

- SPECIAL BLACK 250 (black pigment manufactured by Orion Engineered Carbons)
   40 parts
- SR9003 (polyfunctional polymerizable monomer, propoxylated (2) neopentyl glycol diacrylate manufactured by Sartomer)
   50 parts
- SOLSPERSE 32000 (pigment dispersant manufactured by Noveon)
   10 parts

### (Chemical composition of white dispersion D1W)

- KRONOS 2300 (white pigment manufactured by KRONOS)
   50 parts
- SR9003 (polyfunctional polymerizable monomer, propoxylated (2) neopentyl glycol diacrylate, manufactured by Sartomer)
   46.5 parts
- SOLSPERSE 41000 (pigment dispersant manufactured by Noveon)
   3.5 parts

### <Preparation of ink jet inks for electron beam curing (inks C1, M1, Y1, K1, and W1)>

Components in the following chemical compositions were mixed and stirred to prepare inks C1, M1, Y1, K1, and W1 as inkjet inks for electron beam curing.

### (Chemical composition of ink C1)

- Cyan dispersion D1C (including SR9003)
   9.5 parts
- SR341: 3-methyl-1,5-pentanediol diacrylate (manufactured by Sartomer), polyfunctional polymerizable monomer
   55.6 parts
- A-200: polyethylene glycol (200) diacrylate (manufactured by Sartomer), polyfunctional polymerizable monomer
   27.2 parts
- Initiator 1 shown below: hydrogen abstraction-type polymerization initiator including a polymerizable group
   3 parts
- Genomer 5271: manufactured by Rahn AG, amine compound including a polymerizable group and having a molecular weight of 2300
   3 parts
- Tegorad 2010: manufactured by EVONIK, silicone-based surfactant including a polymerizable group
   1.5 parts
- UV-22 (Irgastab (registered tradeamark) UV-22, poly[oxy(methyl-1,2-ethanediyl)],.alpha.,.alpha.',.alpha."-1,2,3-propanetriyltris[.omega.-[(1-oxo-2-propen-1-yl)oxy]-, 2,6-bis(1,1-dimethylethyl)-4-(phenylenemethylene)cyclohexa-2,5-dien-1-one, manufactured by BASF) (polymerization inhibitor)
   0.2 parts

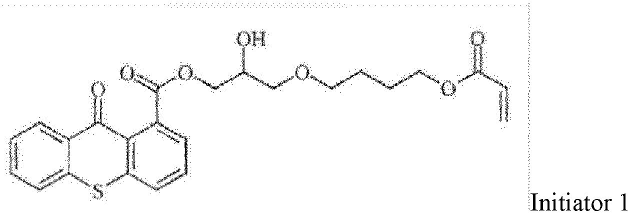

The initiator 1 and initiators 2 to 4 described later were synthesized with reference to JP5722777B.

### (Chemical composition of ink M1)

- Magenta dispersion D1M (including SR9003)
   17 parts
- SR341
   59.2 parts
- A-200
   16.1 parts
- Initiator 1
   3 parts
- Genomer 5271
   3 parts
- Tegorad 2010
   1.5 parts
- UV-22
   0.2 parts

### (Chemical composition of ink Y1)

- Yellow dispersion D1Y (including SR9003)
   10.5 parts
- SR341
   44.0 parts
- A-200
   38.2 parts
- Initiator 1
   3 parts
- Genomer 5271
   3 parts
- Tegorad 2010
   1.5 parts
- UV-22
   0.2 parts

### (Chemical composition of ink K1)

- Black dispersion D1K (including SR9003)
   6.9 parts
- SR341
   46.3 parts
- A-200
   39.5 parts
- Initiator 1
   3 parts
- Genomer 5271
   3 parts
- Tegorad 2010
   1.5 parts
- UV-22
   0.2 parts

### (Chemical composition of ink W1)

- White dispersion D1W (including SR9003)
   30 parts
- SR341
   43.95 parts
- A-200
   18.35 parts
- SC7010
   3 parts
- Genomer 5271
   3 parts
- UV-22
   0.2 parts
- BYK-378
   1.75 parts

### <Preparation of image recording>

The following single-pass inkjet recording apparatus was prepared as an image recording apparatus.

The single-pass inkjet recording apparatus includes: five single-pass inkjet heads (specifically, Samba heads manufactured by FUJIFILM Dimatix, 1200 npi, minimum ink droplet amount: 2 pl, these are hereinafter referred to simply as "heads") arranged along a transport path of a table transport system; and pinning exposure LED light sources (385 nm, 4W) disposed between the heads and on the downstream side of the downstreammost head.

The inks W1, C1, M1, Y1, and K1 were placed in the respective heads in this order from the upstream side.

An electron beam (EB) irradiation device EYE COMPACT EB (manufactured by EYE ELECTRON BEAM CO., LTD.) for final curing was disposed on the downstream side of the pinning exposure LED light source disposed downstream of the downstreammost head.

### [EXAMPLE 1]

### <Recording of cyan monolayer images>

The following method was used to record a line image with a line width of 0.25 pt and a solid image with a dot ratio of 100% as cyan monolayer images.

An impermeable substrate (specifically, Taiko PET manufactured by Futamura Chemical Co., Ltd., thickness: 50 µm, the impermeable substrate is hereinafter referred to simply as a "substrate") subjected to corona treatment immediately before image recording was placed on the transfer table.

The substrate was transported at a transport speed of 50 m/min, and the ink C1 was applied to the substrate during transfer from the head for the ink C1. The applied ink C1 was irradiated with UV (ultraviolet rays) using the LED light source disposed downstream of the head for the ink C1 to perform pinning exposure. As for the pinning exposure conditions, the UV irradiation was performed at an illuminance of 0.40 W/cm² for 0.024 seconds (the pinning exposure was performed under these conditions for all cases).

Next, the ink C1 on the substrate was irradiated with an EB (electron beam) at an acceleration voltage of 90 KV and an irradiation dose of 60 KGy using the EYE COMPACT EB (manufactured by EYE ELECTRON BEAM CO., LTD.) to cure the ink (this process is hereinafter referred to also as "final curing"), and a cyan monolayer image was thereby obtained.

The method described above was used to obtain, as cyan monolayer image recorded articles:
a line image recorded article having a structure including a cyan monolayer line image (line width: 0.25 pt) disposed on an impermeable substrate; and
a solid image recorded article having a structure including a cyan monolayer solid image (dot ratio: 100%) disposed on an impermeable substrate.

### <Evaluation of cyan monolayer image recorded articles>

Each of the cyan monolayer image recorded articles (i.e., the line image recorded article and the solid image recorded article) was evaluated as follows.

The results are shown in Table 1.

### (Adhesiveness)

A cross-hatch test was performed on the solid image in the solid image recorded article according to ISO 2409 (a cross-cut method) to evaluate the adhesiveness of the cyan image to the impermeable substrate according to the following evaluation criteria.

In the cross-hatch test, the distance between the cuts was set to 1 mm, and a lattice with twenty-five 1 mm squares was formed.

In the following evaluation criteria, the highest adhesiveness is ranked A.

In the following evaluation criteria, the ratio (%) of peeled squares in the lattice is a value obtained using the following formula. In the following formula, the total number of squares in the lattice is 25.

Ratio of peeled squares in lattice (%) = [(Number of peeled squares in lattice) / (Total number of squares in lattice)] × 100

### - Evaluation criteria for adhesiveness -

A: The ratio (%) of peeled squares in the lattice was 10% or less.
B: The ratio (%) of peeled squares in the lattice was more than 10% and 90% or less.
C: The ratio (%) of peeled squares in the lattice was more than 90%.

### (Migration amount)

A sample having an area of 0.01 m² was cut from the solid image portion of the solid image recorded article, and 10 mL of a solution mixture of water : ethanol = 70 : 30 (volume ratio) was dropped onto the surface of the solid image in the cut sample.

The sample with the solution mixture dropped thereonto was placed in a sealed glass container in order to prevent volatilization of the solution mixture and left to stand at 40°C for 10 days.

After 10 days of standing, the total leaching amount of components leached from the solid image into the dropped solution mixture was measured (the total leaching amount was used as the migration amount) and rated according to the evaluation criteria below.

The migration amount was measured after 10 days of standing by volatilizing the water-ethanol solution mixture and measuring the mass of the remaining components.

In the following evaluation criteria, a sample with the largest reduction in migration was ranked A.

### - Evaluation criteria for migration amount -

A: The migration amount was 0 ppb.
B: The migration amount was more than 0 ppb and 10 ppb or less.
C: The migration amount was more than 10 ppb and 1 ppm or less.
D: The migration amount was more than 1 ppm and 10 ppm or less.
E: The migration amount was more than 10 ppm.

### (Image density)

The cyan density of the solid image in the solid image recorded article was measured using FD-7 manufactured by KONICA MINOLTA, INC.

The image density was evaluated based on the measurement results according to the evaluation criteria below.

In the following evaluation criteria, the highest image density was ranked A.
A: 1.8 or more.
B: 1.7 or more and less than 1.8.
C: 1.6 or more and less than 1.7.
D: 1.5 or more and less than 1.6.
E: Less than 1.5.

### (Line quality)

For the line image in the line image recorded article, a dot analyzer (DA6000 manufactured by Oji Scientific Instruments) was used to measure raggedness (i.e., the deviation of edges in the obtained line image from ideal edges obtained by the least squares method), and the line quality was evaluated based on the measurement results according to the evaluation criteria below.

In the following evaluation criteria, the highest line quality was ranked A.

### - Evaluation criteria for image quality -

A: The raggedness of the line image was less than 4.0.
B: The raggedness of the line image was 4.0 or more and less than 5.0.
C: The raggedness of the line image was 5.0 or more and less than 6.0.
D: The raggedness of the line image was 6.0 or more and less than 7.0.
E: The raggedness of the line image was 7.0 or more.

### [Examples 2 to 7 and Comparative Examples 1 to 4]

The same procedure as in Example 1 was repeated except that inks C2 to C1 1 prepared by changing part of the chemical composition of the ink C1 as shown in Table 1 were used.

### The results are shown in Table 1.

Numerical values in the component columns in Table 1 mean parts by mass, and blank cells mean that the corresponding components are not contained.

Table 1 shows only part of the chemical composition of each ink. Types and amounts of components not shown in Table 1 are common to all the Examples and Comparative Examples.

The details of the components in Table 1 are as follows.
- SR9003: Propoxylated (2) neopentyl glycol diacrylate (manufactured by Sartomer), polyfunctional polymerizable monomer.
- SR341: 3-Methyl-1,5-pentanediol diacrylate (manufactured by Sartomer), polyfunctional polymerizable monomer.
- A-200: Polyethylene glycol (200) diacrylate (manufactured by Sartomer), polyfunctional polymerizable monomer.

- 4-HBA: 4-Hydroxybutyl acrylate (manufactured by OSAKA ORGANIC CHEMICAL INDUSTRY LTD.), monofunctional polymerizable monomer.
- Initiators 1 to 4: Hydrogen abstraction-type polymerization initiators including polymerizable groups. Their structures are shown below.
- ITX: 2-Isopropylthioxanthone, polymerization initiator containing no polymerizable group.
- GENOMER 5271: manufactured by Rahn AG, amine compound including a polymerizable group and having a molecular weight of 2300.
- Tegorad 2010: manufactured by EVONIK, silicone-based surfactant including a polymerizable group.
- Tegorad 2100: manufactured by EVONIK, silicone-based surfactant including a polymerizable group.
- Tegorad 2100: manufactured by EVONIK, silicone-based surfactant including a polymerizable group.
- BYK-307: manufactured by BYK, silicone-based surfactant including no polymerizable group.

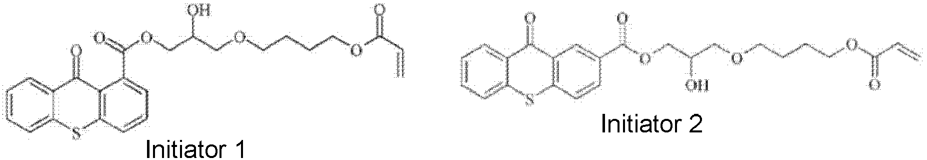

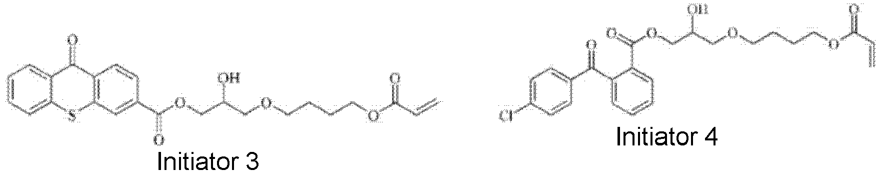

**[Table 1]**

| | | | | Example 1 | Example 2 | Example 3 | Example 4 | Comparative Example 1 | Example 5 | Comparative Example 2 | Example 6 | Example 7 | Comparative Example 3 | Comparative Example 4 |
|---|---|---|---|---|---|---|---|---|---|---|---|---|---|---|
| Ink No. | | | | C1 | C2 | C3 | C4 | C5 | C6 | C7 | C8 | C9 | C10 | C11 |
| | Polymerizable monomer | SR9003 | With polymerizable group | 5.89 | 5.89 | 5.89 | 5.89 | 5.89 | 5.89 | 5.89 | 5.89 | 5.89 | 5.89 | 5.89 |
| | | SR341 | With polymerizable group | 55.6 | 55.6 | 55.6 | 55.6 | 55.6 | 55.6 | 55.6 | 15.1 | 25.1 | 58.1 | 57.1 |
| | | A-200 | With polymerizable group | 27.2 | 27.2 | 27.2 | 27.2 | 27.2 | 27.2 | 27.2 | 22.1 | 21.4 | 27.2 | 27.2 |
| | | 4-HBA | With polymerizable group | | | | | | | | 451 | 30.7 | | |
| | Initiator | Initiator 1 | With polymerizable group | 3 | | | | | 3 | 3 | 3 | 3 | | 3 |
| | | Initiator 2 | With polymerizable group | | 3 | | | | | | | | | |
| | | Initiator 3 | With polymerizable group | | | 3 | | | | | | | | |
| | | Initiator 4 | With polymerizable group | | | | 3 | | | | | | | |
| Primary components in ink | | ITX | With no polymerizable group | | | | | 3 | | | | | | |
| | Amine | GENOMER 5271 | With polymerizable group | 3 | 3 | 3 | 3 | 3 | | | 3 | 3 | 3 | 3 |
| | Surfactant | Tegorad 2010 | With polymerizable group | 1.5 | 1.5 | 1.5 | 1.5 | 1.5 | | | 1.5 | 1.5 | 1.5 | |
| | | Tegorad 2100 | With polymerizable group | | | | | | 1.5 | | | | | |
| | | BYK-307 | With no polymerizable group | | | | | | | 1.5 | | | | |
| Evaluation results | Adhesiveness | | | A | A | A | A | A | A | A | A | A | A | A |
| | Migration amount | | | A | A | A | A | E | A | E | B | A | B | A |
| | Image density | | | A | A | A | A | A | A | A | A | A | E | E |
| | Line quality | | | A | A | A | A | A | A | A | A | A | E | E |

As shown in Table 1, in the image in each Example recorded using the corresponding ink including the polymerizable monomers, the hydrogen abstraction-type polymerization initiator including a polymerizable group, and the surfactant including a polymerizable group, the line quality, the image density, and the adhesiveness were good, and the migration was suppressed.

However, in Comparative Example 1 using ITX (isopropylthioxanthone), which is a hydrogen abstraction-type polymerization initiator including no polymerizable group, instead of the hydrogen abstraction-type polymerization initiator including a polymerizable group, migration from the image could not be suppressed.

In Comparative Example 2 using a surfactant (BYK-307) including no polymerizable group instead of the surfactant including a polymerizable group, migration from the image could not be suppressed.

In Comparative Example 3 using no polymerization initiator, the line quality and image density of the image were poor.

In Comparative Example 4 using no surfactant, the line quality and image density of the image were poor.

In Examples 1 to 5 and 7 in which the ratio of the polyfunctional polymerizable monomers to the total amount of the polymerizable monomers was 60% by mass or more, the migration was further suppressed as compared with that in Example 6 in which the ratio of the polyfunctional polymerizable monomers was less than 60% by mass.

The ratio of the polyfunctional polymerizable monomers to the total amount of the polymerizable monomers was 100% by mass in Examples 1 to 5, 63% by mass in Example 7, and 49% by mass in Example 6.

### [Example 101]

### <Recording of multilayer images>

Multilayer images including a multilayer solid image and a multilayer line image were recorded by the following methods.

### (Multilayer solid image)

The same procedure as in the "Recording of cyan monolayer images" (solid image) in Example 1 was repeated to record a multilayer solid image except that the procedure including applying the ink C1 and performing the pinning exposure operation on the ink C1 in the "Recording of cyan monolayer images" was changed to a procedure including, in order:
applying the ink W1 as a first ink (dot ratio: 100%);
performing pinning exposure on the applied ink W1;
applying the ink C1 as a second ink (dot ratio: 50%);
applying the ink M1 as a second ink (dot ratio: 50%);
applying the ink Y1 as a second ink (dot ratio: 50%); and
applying the ink K1 as a second ink (dot ratio: 50%).

Specifically, in the above multilayer solid image recording also, the final EB irradiation (i.e., final curing) was performed in the same manner as in the Recording of cyan monolayer images.

In the manner described above, a multilayer solid image recorded article having a structure including the multilayer solid image disposed on the impermeable substrate was obtained.

The multilayer solid image includes a white image with a dot ratio of 100% and a composite black image disposed on the white image. The composite black image is an image having a structure in which a cyan image with a dot ratio of 50%, a magenta image with a dot ratio of 50%, a yellow image with a dot ratio of 50%, and a black image with a dot ratio of 50% are superimposed.

### (Multilayer line image)

The same procedure as in the "Recording of cyan monolayer images" (solid image) in Example 1 was repeated to record a multilayer line image except that the procedure including applying the ink C1 and performing the pinning exposure operation on the ink C1 in the "Recording of cyan monolayer images" was changed to a procedure including, in order:
applying the ink W1 as a first ink (dot ratio: 100%);
performing pinning exposure on the applied ink W1; and
applying the ink K1 as a second ink (to form a line image with a line width of 0.25 pt).

Specifically, in the above multilayer line image recording also, the final EB irradiation (i.e., final curing) was performed in the same manner as in the Recording of cyan monolayer images.

In the manner described above, a multilayer line image recorded article having a structure including the multilayer line image disposed on the impermeable substrate was obtained.

The multilayer line image includes:
a white image that is a solid image with a dot ratio of 100%; and
a black line image having a line width of 0.25 pt and disposed on the white image.

### <Evaluation of multilayer image recorded articles>

Each of the multilayer image recorded articles (i.e., the multilayer line image recorded article and the multilayer solid image recorded article) was evaluated in the same manner as for the cyan monolayer image recorded articles described above (i.e., the adhesiveness, migration amount, image density, and line quality were evaluated).

The adhesiveness, migration amount, and image density were evaluated using the multilayer solid image recorded article, and the line quality was evaluated using the multilayer line image recorded article.

The results are shown in Table 2.

### [Examples 102 to 103]

The same procedure as in Example 101 was repeated except that whether the pinning exposure was performed immediately after the application of each ink was changed as shown in Table 2.

The phrase "immediately after the application of each ink" means immediately after the application of the ink but before the application of the next ink.

The results are shown in Table 2.

### [Comparative Example 101]

The same procedure as in Example 101 was repeated except that the final curing (i.e., the electron beam (EB) irradiation) was not performed.

The results are shown in Table 2.

### [Comparative Example 102]

The same procedure as in Example 101 was repeated except that, instead of the electron beam (EB) irradiation, ultraviolet ray (UV) irradiation using a metal halide lamp was performed for final curing.

The ultraviolet ray (UV) irradiation using the metal halide lamp was performed using an ultraviolet ray irradiation apparatus (product name "CSOT-40," a 4 KW metal halide lamp manufactured by GS Japan Storage Battery Co Ltd.

The results are shown in Table 2.

**[Table 2]**

| | | Example 101 | Example 102 | Example 103 | Comparative Example 101 | Comparative Example 102 |
|---|---|---|---|---|---|---|
| White ink (first ink) | | W1 | W1 | W1 | W1 | W1 |
| Cyan ink (second ink) | | C1 | C1 | C1 | C1 | C1 |
| Magenta ink (second ink) | | M1 | M1 | M1 | M1 | M1 |
| Yellow ink (second ink) | | Y1 | Y1 | Y1 | Y1 | Y1 |
| Black ink (second ink) | | K1 | K1 | K1 | K1 | K1 |
| Pinning exposure | Immediately after application of white ink | Yes | Yes | No | Yes | Yes |
| | Immediately after application of cyan ink | No | Yes | No | Yes | Yes |
| | Immediately after application of magenta ink | No | Yes | No | Yes | Yes |
| | Immediately after application of yellow ink | No | Yes | No | Yes | Yes |
| | Immediately after application of black ink | No | Yes | No | Yes | Yes |
| Final curing | | EB | EB | EB | No | UV |
| Evaluation results | Adhesiveness | A | A | A | C | C |
| | Migration amount | A | A | A | E | E |
| | Image density | A | A | B | A | A |
| | Line quality | A | A | B | A | A |

As shown in Table 2, in the multilayer images in Examples 101 to 103 in which the image recording method including the application step of applying the inks of the present disclosure (specifically the white ink W1, the cyan ink C1, the magenta ink M1, the yellow ink Y1, and the black ink K1) to an impermeable substrate and the electron beam irradiation step of irradiating the inks of the present disclosure applied to the impermeable substrate with an electron beam (EB) was performed, the line quality, the image density, and the adhesiveness were good, and the migration was suppressed.

However, in Comparative Example 101 in which the electron beam (EB) irradiation was not performed and Comparative Example 102 in which the ultraviolet rays (UV) were used instead of the electron beam (EB) for the irradiation, the migration from the image was large, and the adhesiveness of the image was low.

In Examples 101 to 102 among Examples 101 to 103, the pinning exposure was performed immediately after the application of the white ink used as the first ink, and the image density and line quality of the multilayer image obtained were particularly good.

Examples 101 to 102 correspond to the recording method A, which is one of the preferred modes of the image recording method of the disclosure.

The entire contents of the disclosure of JP2021-206144 filed on December 20, 2021 are incorporated herein by reference.

All publications, patent applications, and technical standards described herein are incorporated herein by reference to the same extent as if each individual publication, patent, or patent application were specifically and individually indicated to be incorporated by reference.

## Claims

1. An ink jet ink for electron beam curing comprising:
a polymerizable monomer;
a hydrogen abstraction-type polymerization initiator including a polymerizable group; and
a surfactant including a polymerizable group.

2. The ink jet ink for electron beam curing according to claim 1, wherein the hydrogen abstraction-type polymerization initiator including a polymerizable group includes at least one selected from the group consisting of a thioxanthone compound including a polymerizable group and a benzophenone compound including a polymerizable group.

3. The ink jet ink for electron beam curing according to claim 1 or 2, further comprising an amine compound including a polymerizable group.

4. The ink jet ink for electron beam curing according to any one of claims 1 to 3, wherein the surfactant including a polymerizable group includes a silicone-based surfactant including a (meth)acryloyl group.

5. The ink jet ink for electron beam curing according to any one of claims 1 to 4, wherein a total content of compounds each including a polymerizable group with respect to a total amount of the inkjet ink for electron beam curing is 80% by mass or more.

6. The ink jet ink for electron beam curing according to any one of claims 1 to 5, wherein the polymerizable monomer includes a polyfunctional polymerizable monomer at a ratio of 60% by mass or more to the total amount of the polymerizable monomer.

7. An ink set comprising two or more inkjet inks for electron beam curing, each of the inkjet inks being the inkjet ink for electron beam curing according to any one of claims 1 to 6.

8. An image recording method comprising:
an application step of applying the ink jet ink for electron beam curing according to any one of claims 1 to 6 to an impermeable substrate; and
an electron beam irradiation step of irradiating the ink jet ink for electron beam curing applied to the impermeable substrate with an electron beam.

9. The image recording method according to claim 8, wherein the application step further includes irradiating the ink jet ink for electron beam curing applied to the impermeable substrate with ultraviolet rays including a radiation with a wavelength of 300 nm to 395 nm.

10. An image recording method comprising:
a first ink application step of applying a first ink to an impermeable substrate and irradiating the applied first ink with ultraviolet rays including a radiation with a wavelength of 300 nm to 395 nm, the first ink being the ink jet ink for electron beam curing according to any one of claims 1 to 6;
a second ink application step of applying a second ink to the first ink irradiated with the ultraviolet rays, the second ink being the ink jet ink for electron beam curing according to any one of claims 1 to 6; and
an electron beam irradiation step of, after the second ink application step, irradiating the first ink and the second ink on the impermeable substrate with an electron beam.
